# EUROPEAN PATENT APPLICATION

(11) **EP 2 236 854 A1**
(43) Date of publication of application: **06.10.2010**
(21) Application number: 10159056.0
(22) Date of filing: 02.04.2010
(51) Int. Cl.: F16F 9/46

(54) **Continuously controllable damper device**

(30) Priority: 02.04.2009 NL 2002704
(71) Applicant: WP Suspension B.V., 6581 KA Malden (NL)
(72) Inventor: Lindeman, Eric Alexander, 6642 AP, BEUNINGEN (NL)
(74) Representative: Hollaar, Cornelis

(57) **Abstract**

Damper device (1) comprising a piston rod (3) which extends into a cylinder housing (2), a piston (12) and a piston rod (3), wherein the piston rod (3) comprises a bypass channel (5) having a first opening (16) in a first chamber (13) and a second opening (172) in a second chamber (14); an internal valve (30) is connected to the piston rod (3) inside the cylinder housing (2) comprising: a closing element (33) axially movable with respect to the piston rod (3) from a first extreme position to a second extreme position to open or close an opening of the by pass channel (15); a spring (34) to force the sleeve element (33) into the first position; a coil (38) to generate a magnetic field (B); and a magnetic body (36,39) to guide a generated magnetic field (B). The damper device (1) is improved in that the clearance (40) is oriented in the axial direction, wherein the magnitude of the clearance (40) is variable in dependence of a movement of the closing element (32).

## Description

The present invention relates to a damper device according to the preamble of claim 1.

Such a damper device is for example known from EP0.122.575 which discloses a damper device comprising a piston rod which extends into a cylinder housing. A piston is connected at an end of the piston rod. The piston divides the cylinder housing in a first chamber and a second chamber. The first and second chambers are in fluid communication with each other by passages in said piston. The piston rod comprises further a by pass channel having a first opening in the first chamber and a second opening in the second chamber.

The by pass channel can be opened and closed by an internal valve. The internal valve is arranged inside the cylinder housing. The internal valve comprises three coils which are electrically connected to a control unit. The control unit is integrated inside the piston rod. The three coils are each separately embedded in a cylinder body having a ring shaped bottom and a ring shaped cap which covers the coil. The three coils are stapled above each other wherein magnetic isolating rings are positioned in between the stapled cylinder bodies.

The coils surround an inner positioned sleeve element. The sleeve element is coaxially arranged with the coil and is axially movable along the piston rod to open or close an opening of the by pass channel. A compression spring is coaxially connected to the sleeve element to press the sleeve element against a stop at the opposite end of the sleeve. The sleeve element has at its outer surface a staggered pattern of protruding rings which in use may be aligned with the ring shaped caps and bottoms of the cylinder bodies. The alignment of the rings can be forced by exciting one of the coils. The electrical excitation of a coil will cause a magnetic field which will force the alignment of the rings which cause the sleeve element to move in steps away from the stop. By subsequently exciting one of the coils it is possible to position the sleeve element into five different positions.

A position wherein the sleeve rests against the stop closes the opening of the by pass channel. When the sleeve moves stepwise away from the stop up to one of the subsequent positions, the opening is incrementally opened by the sleeve. After opening of the by pass channel, fluid can pass through the by pass channel which changes the damping properties of the damping device.

A problem to the known damping device relates to the incremental change of the damping properties. The variation of the damping properties is determined by the amount of steps of the sleeve element. The amount of protruding rings at the outer surface of the sleeve element define the amount of variations on the damping properties. Herewith, a user of the damping device is limited in its control of the damping device and thus is limited in its anticipation of the vehicle to occurring circumstances. A further problem to the known damping device is that it has a complex configuration which makes the damping device relative expensive.

DE 3922891 discloses a controllable shock absorber which damping properties can be adjusted to a soft or a hard behaviour. The shock absorber comprises a cylindrical housing divided into a first and second chamber by a piston which is connected to a piston rod. The piston rod is provided with a by pass channel. The first chamber is in fluid communication with the second chamber via the by pass channel. The by pass channel can be opened or closed by a slidable assembly of an anchor and a valve sleeve. The assembly is balanced with a strong spring and a soft spring at both ends of the assembly. Two magnetic coils are arranged to act the assembly in axial direction. The assembly is slidable over a travel distance from an initial intermediate position until the assembly hits against a stopper in a first extreme position or a second extreme position.

The disclosed shock absorber has a drawback in that it has no accurate control. It is hard to control a movement of the assembly over just a part of the travel distance. In particular, the controllability of the movement back to the initial intermediate position occurs abruptly and is not satisfying.

It is an object of the present invention to at least partially eliminate the above drawbacks and/or to provide a useable alternative. In particular, it is an object of the invention to provide a damper device having continuous controllable damping properties.

This object is achieved by a damper device as defined by claim 1.
The damper device according to the invention comprises a piston rod. The piston rod extends into a cylinder housing. Preferably, the piston rod is hollow over its whole length. A piston is connected to the piston rod. The piston divides the cylinder housing in a first chamber and a second chamber.

Preferably, the cylinder housing further has a third chamber which is an air chamber. The air chamber may be integrated in the cylinder housing and may comprise compressed air or a nitrogen volume. This makes the damper device more compact to mount it to a motor vehicle, in particular a motorcycle. The air chamber may be sealed from the other chambers by a separation piston or a bladder. The air chamber provides a compensation for a volume variation as a result of the movement of the piston rod in and out the cylinder housing.

The first and second chambers are in fluid communication by passages in the piston. A hydraulic fluid may flow from the first to the second chamber through the passages. Generally, the passages are one way closed by shims. The shims may be provided on both sides of the piston.

The piston rod comprises a bypass channel having a first opening in the first chamber and a second opening in the second chamber. The by-pass channel may be defined by the hollow piston rod. Fluid may flow from the first chamber to the second chamber through the by pass channel via the first and second opening. The by-pass channel and the passages through the piston together define the damping characteristic of the damper device.

The by pass channel can be opened or closed by an internal valve. The internal valve is mounted inside the cylinder housing. In stead of an external valve, this internal valve is less susceptible for damages, corrosion and contamination from the environment. The internal valve is arranged to at least partially open or close one of the openings to the by pass channel. In addition, the internal valve according to the invention inside the cylinder housing may increase the thermal stability of the damper device which may further improve the controllability of the damper device. During the use the hydraulic fluid inside the cylinder housing will heat up. The heating of the fluid lowers the viscosity of the fluid which could have a negative effect on the damping characteristic. However, the raised temperature of the fluid also affects the internal valve and at least partially compensates this negative effect by an increase of the electrical resistance of a coil. The increased resistance will result in less movement of the closing element, which will cause a higher damping characteristic. Therefore, the internal valve inside the cylinder housing may advantageously contribute to a stable controllable damping characteristic.

The internal valve comprises a closing element. The closing element is configured to at least partially open or close an opening of the by pass channel. The closing element is coaxially arranged with the piston rod and is axially movable with respect to the piston rod from a first extreme position to a second extreme position. The closing element moves over a travel distance from the first to the second position.

The internal valve further comprises a spring which is coaxially connected to the closing element to generate a spring force to force the sleeve element into the first position. Preferably the spring is a compression spring. The spring may act directly or indirectly on the closing element. In a preferred embodiment, the spring is situated outside the axial course of the magnetic field. The spring may be positioned at least partially inside a spring container. The spring container may have a cylindrical shape which is at least partially made of a magnetically isolating material. The spring container may shield the spring from a generated magnetic field. Via the spring container the spring may indirectly act on the closing element. Further, the internal valve comprises a coil to generate a magnetic field. By generating a magnetic field, the closing element may be actuated to move in the axial direction against the spring pressure from the first position to a second position.

The magnetic field has an axial course through the coil and a radial course at both ends of the coil. To apply a current to the coil, the coil is electrically connected to a control unit to control the movement of the closing element. A magnetic body is provided to guide a generated magnetic field. A clearance is provided in between the magnetic body and the closing element.

In the first place, the damper device according to the invention is improved in that the clearance in between the magnetic body and the closing element is oriented in the axial direction. A magnetic field through the clearance has a course in substantially an axial direction. The magnitude of the clearance in the axial direction is variable during a movement of the closing element from the first to the second position. Preferably, the magnitude of the clearance decreases during a movement of the closing element to the second position.

Advantageously, the position of the closing element may be continuously and preferably substantially proportionally controllable in dependence of the amount of current through the coil of the internal valve. Preferably, the position of the closing element is substantially linear with the amount of current applied to the coil of the internal valve.

Advantageously, the opening of the by pass channel can be accurately varied by the continuous movement of the closing element. The closing element may be accurately positioned in dependence of the amount of applied current to the coil in each position in between the first and the second position. Herewith, the damping characteristic can be optimised to the occurring circumstances. It may be possible to define a rough damping characteristic by the passages through the piston, while the damping characteristic may be further fine tuned by an adjustment of the closing element. The adjustment of the closing element may be continuous movable and preferably proportional to the amount of current applied to the coil, which allows a more accurate fine adjustment in stead of an incremental, stepwise adjustment.

The fine tuning may be done manually, but preferably this is done by a programmable control unit. Software may get an input from a sensor which may be electrically connected to the control unit to measure e.g. a displacement or velocity of the piston relative to the cylinder housing. If a predefined value of a sensor input, like a displacement, velocity, or acceleration of the piston rod is exceeded, the damping characteristic may be adjusted by a corresponding movement of the closing element. The predefined value may be stored as a control parameter in a memory of a control unit. The control unit may be provided with software which may comprise a table or formula to convert a sensor input into a corresponding current to excite the coil. The damping characteristic may also be controlled in dependency of a pressure measure in the first or second chamber. Advantageously, the control of the damper device according to the invention may have a fast response time which allows a control of the damper characteristic during a ride. The damping characteristic may be adjusted during a ride to compensate e.g. for changing circumstances on the road.

Secondly, the invention provides an improvement in that according to the invention, a magnetic isolation is provided at the heading of the closing element in the second position. The magnetic isolation may be arranged by a separate component, e.g. a stopper ring or may be fixed and integrated in the closing element. The magnetic isolation may reduce a negative fastening effect. The presence of the magnetic isolation may minimise magnetic hysteresis or a so called sticking effect. This will be further explained later on.

In an embodiment according to the invention, the closing element is at least partially situated in the axially course of the magnetic field. The closing element may comprise a magnetic core which may be located in the magnetic field. The closing element according to the invention may have locally at the radial course a substantially constant outer contour, such that no alignment of the closing element with respect to the coil is caused by the radial course. Preferably, the closing element has a substantially constant outer diameter. The closing element has no alignment means, like ring shaped protrusions, to stop the closing element in between the first and second position. Preferably, the closing element has at least partially a smooth outer surface, wherein the smooth outer surface passes the radial course of the magnetic field during a movement of the closing element from the first to the second position. Advantageously, the closing element may have a simple configuration which allows a compact design of the internal valve in the radial direction.

In embodiment of the damper device according to the invention, the internal valve is connected at an distal end of the piston rod behind the piston in the second chamber. Preferably, the internal valve comprises an extension portion to extend an existing original piston rod of an available damper device to adapt its configuration to get a damper device according to the invention. The extension portion may be hollow and longitudinal. The hollow extension portion may extend the by pass channel inside the piston rod. The extension portion may be advantageous to get a modular system. A modular configuration may be advantageous in production, because it may be easy to manufacture damper devices with or without an internal valve.

In an alternative embodiment of the damper device according to the invention, the internal valve may be connected to the piston rod before the piston in the first chamber.

In an embodiment of the damper device according to the invention, the internal valve has only one single coil.

In an embodiment, the coil is wound on a reel. The reel may have a hollow cylindrical body. An end of the cylindrical body may be provided with a flange. Two flanges at both ends of the cylindrical body of the reel may be provided to enclose the coil. Preferably, the reel is made from a non magnetic material. The reel may be made from a plastic material. The non magnetic reel may improve the internal valve by directing and concentrating the magnetic field through the coil. The reel may be hollow, wherein the closing element fits inside the reel. The reel may guide the closing element in an axial direction, but preferably the closing element is guided by the piston rod or an extension portion mounted to the piston rod.

In a preferred embodiment of the damper device, the coil is a thermo bond coil. A thermo bond coil can be manufactured by winding an isolated wire on a shaft and a subsequently heating of the isolated wire by short circuiting the wire. By heating the wire, the covering of the wire which forms an isolation will be melted and bonded to one piece. The application of a thermo bond coil reduces the amount of components of the internal valve, which advantageously further increases the simplicity of the total configuration of the damper device. The light weight configuration may further improve the dynamic behaviour of the damper device.

In an embodiment of the damper device according to the invention, the coil is surrounded by a cylinder body out of a magnetic material. Preferably, the cylinder body is at least partially made of magnetic material, like soft iron. The cylinder body may shield the coil and improve the guidance of the magnetic field along the outside of the coil. Advantageously, the cylinder body, alias a coil housing, provides together with the cylinder housing, alias a damper tube, a double magnetic isolation which may provide a configuration of a damper device which complies to EMC specifications.

The single coil preferably comprises a first and a second electrical connector to excite the coil to move the closing element away from the first position. Electrical wires can be connected to the first and second connectors. Preferably, a first electrical wire extends from the coil to outside the cylinder housing. The electrical wire may pass from the coil via a wire hole in the reel and in the cylinder body to the by pass channel of the piston rod. The wire hole is preferably provided in one of the flanges of the reel and cylinder body. Via the by pass channel and the hollow piston rod, the electrical wire can be extended to the control unit, which can be mounted external the piston rod.

In a preferred embodiment the second electrical connector of the coil is grounded to zero potential by a connection to a component of the damper device. The second connector may e.g. be electrically connected to the piston or piston rod.

A further improvement of the controllability of the damper device according to the invention focuses on a heading surface of the closing element at the side of the spring. The spring may abut against this heading surface. Preferably, the heading surface is in the second position of the closing element magnetically non conductive in an axial direction away from the heading surface. When the closing element is positioned in the second position, a magnetic isolation is provided locally around the heading of the closing element. Due to the magnetic isolation, the axial course of the magnetic field by-passes the heading surface. The substantially straight axial course of the magnetic field through the coil, makes a deviation and bends away to circumference the heading surface of the closing element.

Advantageously, the presence of the magnetic isolation at the heading of the closing element reduces a sticking effect of the closing element in the second position. The closing element of the internal valve according to the invention is normally closed by the compression spring. Without excitation of the coil, the closing element remains in the first position. By applying a current to the coil, the closing element moves from the first position to the second position. Without a magnetic isolation at the heading of the closing element, the closing element would rest against an adjacent component, wherein the magnetic field passes through the heading surface of the closing element. It has appeared that the passing of the magnetic field causes in that situation a fastening of the closing element to the adjacent component. The fastening in the second position disturbs a good behaviour of the internal valve. The closing element remains in position when the earlier applied current is subsequently reduced. Only after a substantial reduction of current, the spring is able to release the closing element which results in a sudden jump of the closing element away from the adjacent component. A magnetic hysteresis occurs. This sudden moment of releasing makes the closing element instable and reduces the controllability of the internal valve.

According to the invention, the presence of the magnetic isolation at the heading of the closing element in the second position may reduce this negative fastening effect. The presence of the magnetic isolation may minimise the magnetic hysteresis. The magnetic field may substantively by pass the heading surface of the closing element. A current may be applied to the coil which causes the closing element to move from the first position to the second position. A subsequent reduction of applied current may subsequently result in a proportional removal of the closing element from the second position to the first position. Herewith, the backwards movement of the closing element to the first position may be arranged in a controllable way. This may improve the accuracy of the fine tuning of the damping characteristic of the damper device.

The described magnetic isolation may in particular in the field of vehicles be advantageous, because in this technical field it is desired to minimize energy consumptions of vehicle components. The described fastening effect is a more serious factor of disturbance when applied currents are very low, e.g. at the most 2A, in particular at the most 1A. In tests it has e.g. appeared that a loosening of the closing element from the second position occurred finally at a reduction of the current from 1A to 0.2A which means a current reduction of about 80%. It will be understand that in such a case a proportional backwards movement of the closing element is hardly controllable. In the tests, the magnetic isolation according to the invention has strongly reduced the negative fastening effect. It has appeared that the closing element already released at a minimal current drop . Herewith, the controllability of the damping characteristic of the damper device is strongly improved.

It may be an additional advantage, that the internal valve may be suitable to use at a low power. The low capacity of the internal valve may advantageously reduce a required capacity of a battery. Further, the low power configuration allow light weight components. The mass of the spring and closing element may be further reduced. The reduction of masses enables an improved dynamic control, wherein the response time of the closing element may be reduced to at most 10ms, in particular at the most 5ms and preferably at the most 3ms. The control unit may have a processing frequency of about 330Hz. Advantageously, as a result of the fast response time of the damper device according to the invention, the damper device may be controlled during a ride of a vehicle. The response time of the internal valve may be reduced so far that it is possible to anticipate the damping behaviour of a motor vehicle practically instantaneous to compensate for occurring bumps, handling movements such as dive and pitch.

In an embodiment according to the invention a non-magnetic portion may be provided at a heading of the closing element to obtain a non-magnetic heading surface. The non magnetic portion at the heading of the closing element may prevent an abutment of the closing element against a magnetic conductive component. The non magnetic portion may be made of a plastic material.

In an embodiment according to the invention the magnetic isolation is provided by an air gap in the second position of the closing element in between the closing element and an adjacent component of the damper device.

In an embodiment according to the invention, the internal valve may comprise a stopper to limit the travel of the closing element in the extreme second position. The stopper at least partially magnetically isolates in axial direction the closing element in the second position. In an embodiment according to the invention the stopper may be integrated with the reel. The reel may have a through hole having locally a smaller inner diameter which defines the stopper at the second position. A notch on the inner diameter of the reel may have a similar effect. The stopper and the reel may be made out of one piece.

In an embodiment according to the invention the stopper is a stopper ring. The stopper may be ring shaped. The stopper ring may be made out of plastic material or any other non magnetic material. The stopper ring may be positioned at the heading of the sleeve element. The spring may be enclosed in between the stopper ring and the closing element.

A further improvement of the controllability of the damper device according to the invention can be achieved by a closing element which is sleeve shaped. The closing element may be a sleeve element. Preferably, the outer surface of the sleeve element is smooth. The sleeve element may have locally a substantially constant outer diameter to smoothly pass the radial course of the magnetic field. The sleeve element may have an inner receiving recess to receive the spring of the internal valve.

The sleeve element as a closing element in stead of e.g. a needle element may provide advantageously an improved controllable axial movement. The axial movement of the sleeve element may advantageously be less susceptible to resistances caused by a fluid flow or pressure differences on in and outlet sides of the by pass channel. A needle shaped element inside a by pass channel is for example susceptible to a resistance causes by the passing fluid flow and acting pressure differences between in and outlet sides of the by pass channel. The sleeve element outside the piston rod may cover at least one opening to the by pass channel. The fluid flow passing through the opening to the by pass channel may be angled with respect to axial movement of the sleeve element which results in less resistance to the movement. The movement of the sleeve element which is less susceptible to fluid flow resistances may be better controllable. The improved controllability of the closing element may advantageously provide an improved damping behaviour of the damper device.

In addition, it may be advantageous that a sleeve element may provide a damping effect in both a rebound as a compression travel of a damper device.

The damper device is connectable to a main mass and a spring mass. The main mass is for example a main frame of a vehicle including a seat and a tank. The spring mass is for example a sub frame, like a wheel frame including a wheel. In an embodiment according to the invention the closing element is forced by the spring in a direction to the main mass. Advantageously, herewith inertia forces may compensate for sudden undesired accelerations or vibrations. In a reaction to a sudden acceleration of the piston rod into the cylinder housing, the closing element may close due to inertia forces the by pass channel.

Further, the invention relates to an internal valve for mounting in a cylinder housing of a damper device according to the invention. The internal valve according to the invention may be supplied as a modular unit to upgrade an existing damper device to a damper device according to the invention.

Further, the invention relates to a suspension system comprising a damper device according to the invention. The suspension system may comprise further a compression spring. The compression spring may be configured to compensate a static and spring mass of a vehicle.

The suspension system may e.g. be configured as a front fork for a motor bicycle. The compression spring may be arranged coaxial with the damper device. In an embodiment of a front fork, the compression spring may be arranged in series with the damper device according to the invention.

In an embodiment according to the invention the suspension system may be arranged to suspend a sub frame to a main frame. The subframe may be a rear wheel frame of a motorcycle, trike or quad. The suspension system may be arranged inside a steering damper used on a motorcycle, trike or quad. A compression spring may be arranged in between the sub- and main frame close to the damper device of the suspension system to compensate occurring loads.

Further, the invention relates to a motor vehicle, in particular a motorcycle, comprising a damper device according to the invention.

Further, the invention relates to a method of controlling a damping characteristic of a damper device according to the invention. The method comprises at least the following steps which may be incorporated in software of a control unit:
- Generating a sensor signal by e.g. measuring a movement, velocity or acceleration of a piston;
- Comparing the sensor signal to a control parameter;
- Applying a current to an internal valve in dependence of the comparison of the control parameter with the sensor signal.

Further preferred embodiments according to the invention are defined in the subclaims.

The invention will be further explained with reference to the accompanying drawings which illustrate a practical embodiment of the invention but should not be regarded as limiting and in which:
Fig. 1 shows in a cross sectional view a preferred embodiment of a damper device according to the invention having an internal valve;
Fig. 2a shows in a more detailed view the internal valve as shown in Fig. 1
Fig. 2b shows in a more detailed view an alternative embodiment of the internal valve as shown in Fig. 1; and
Fig. 3 shows a suspension as a front fork in a partially cross-sectional view having an internal valve according to the invention.

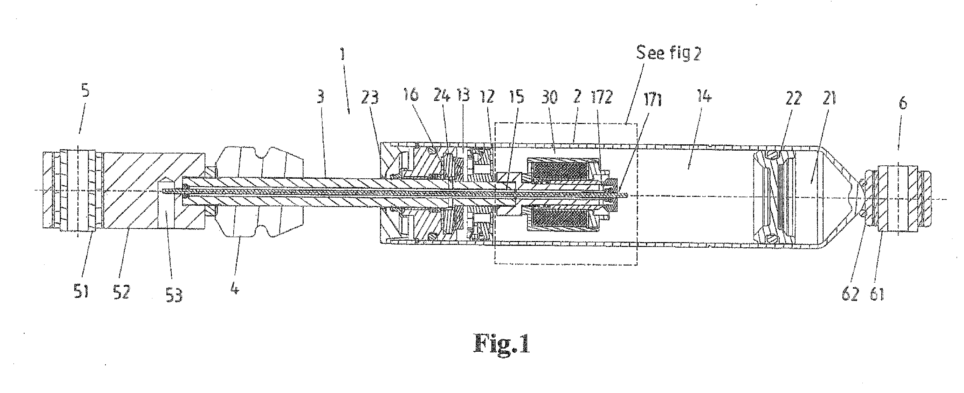

Figure 1 shows in a cross section view a damper device according to the invention. The damper device 1 is suitable to serve as a shock absorber for a motor vehicle in particular a motorbike. The damper device 1 has at both ends a connector eye 5,6 to connect the damper device in between a main mass and a spring mass, e.g. two subframes, e.g. a wheelframe and a main frame of a motorbike.

The damper device 1 comprises a piston rod 3 which extends into a cylinder housing 2. The piston rod has a hollow shaft having a hollow space and two ends. One end of the piston rod extends into a cylinder housing. The other end of the piston rod is connected to a first connector eye 5. The connector eye comprises a bearing 51 and a bearing housing 52. The piston rod 3 is connected to the bearing housing 52 by a threaded hole. The bearing housing comprises a radially extending hole 53 which is in fluid communication with the hollow space of the piston rod. In assembly the radially extending hole is used as a wire hole to guide one or two electrical wires.

The piston rod 3 is movable mounted with respect to the cylinder housing 2. The piston rod 3 can move into the cylinder housing 2 until a bumbrubber 4 hits the cylinder housing 2. The bumbrubber 4 is mounted external the cylinder housing 2 to the piston rod 3. The bumbrubber 4 is cylindrically shaped and formed by a piece of rubber.

The cylinder housing 2, or so called damper tube, is thin walled and formed as a cup. The cylinder housing is manufactured by deep drawing. Other method like forging and welding a tube and bottom piece together are also possible. At one end the cylinder housing 2 is closed and connected to a second connector eye 6. The second connector eye 6 is welded to the cylinder housing 2. The second connector eye comprises a bearing 61 in a bearing housing 62.

At the closed end of the cylinder housing 2, the cylinder housing comprises an air chamber 21 which is sealed off by an air piston 22, which is also called a separation piston. The separation piston is disk shaped and has an O-ring around its circumference. The separation piston 22 is axially movable with respect to the cylinder housing 2. The cylinder housing 2 comprises at its inner circumference an air piston retainer ring to limit the travel of the air piston. The separation piston 22 serves as an air spring to compensate for a variation in oil volume when the piston rod enters the cylinder housing.

At the opposite side of the closed end, the cylinder housing is closed off by a cover 23. The cover 23 is disk shaped and is press fitted into the cup shaped cylinder housing 2. The cover 23 has a through hole to provide a passage for the piston rod 3. A scraper is mounted in the through hole to seal the piston rod 3.

An internal rebound rubber 24 is arranged close to the cover 23. The internal rebound rubber 24 comprises spring means to damp the axially movement of the piston rod.

A piston 12 is mounted at the end of the piston rod 3. The piston divides the cylinder housing in a first chamber 13 and a second chamber 14. The first and second chambers 13, 14 are hydraulic fluid chambers which can be filled by a fluid like oil. The piston 12 has passages which allows the fluid to pass to and fro the chambers 13,14 during a movement of the piston rod 3. The passages are provided with resistance means like shims which determine the damping properties of the damper device.

Beside a fluid flow through the passages in the piston a secondary flow of fluid is also possible through the hollow space of the piston rod 3. The hollow space of the piston rod defines a by pass channel 15. The by pass channel has a first opening 16 in the first chamber 13 and a second opening 172 in the second chamber 14. The first and second opening may comprise just one hole but may also comprise a group of holes which are in fluid communication with the hollow space of the piston rod. The holes may be regularly arranged along the circumference of the piston rod. The first opening 16 is arranged at one side of the piston 12, wherein the second opening 172 is arranged at the opposite side of the piston 12. Herewith, the hollow space of the piston rod and the first and second openings define the by pass channel 15.

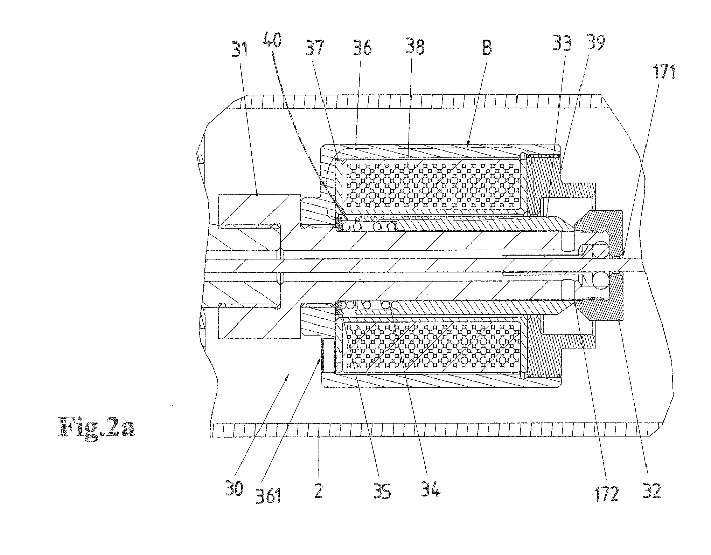

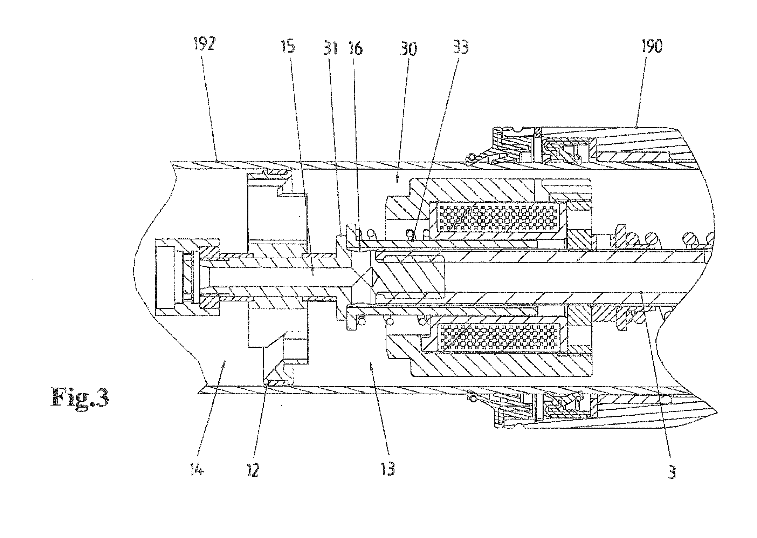

As shown in Fig. 1 and in more detail in Fig. 2a, an internal valve 30 is provided to close off at least partially at least one of the holes of the second opening 172. The so called internal valve 30 is positioned inside the cylinder housing 2. The second opening 172 can be closed at least partially. The internal valve 30 is mounted at the end of the piston rod 3. In another embodiment the internal valve 30 can be mounted at the other side of the piston which is shown in Fig. 3.

The internal valve 30 is mounted on an extension portion 31. The extension portion 31 is made out of a non magnetic material, which means that it has a low magnetic permeability, like Aluminium. The extension portion 31 has a hollow shaft shape. The hollow shaft shape lengthens the by pass channel 15 in the hollow piston rod 3. The extension portion 31 advantageously makes the implementation of an internal valve 30 to an existing damper device possible. Herewith, the extension portion 31 creates a modular system. The extension portion 31 has at one side a blind threaded hole to fasten the extension portion to a threaded end part of a piston rod 3. The extension portion 31 comprises at least one sealable wire hole 171 which is in fluid communication with the hollow space of the piston rod 3. Spaced apart from the wire hole 171, at least one further closable hole 172 is provided at the opposite end of the extension portion. The closable hole 172 is at least partially closable by a sleeve element 33.

The sleeve element 33 has a smooth outer surface. The sleeve element comprises a magnetic material. Preferably, the sleeve element is made from a magnetic material, but the sleeve element may also be made partially from a magnetic material. The sleeve element 33 is tube shaped. The inner diameter of the sleeve element 33 corresponds with an outer diameter of the extension portion 31. The sleeve element 33 is slidably arranged with respect to the extension portion 31. The sleeve element 33 is movable in between a first position (as shown) and a second position. In the second position the sleeve element 33 abuts a base ring 35.

A spiral compression spring 34 is coaxially positioned with respect to the sleeve element 33. The spring 34 forces the sleeve element 33 in the first position wherein the holes 172 of the second opening are closed. Herewith, without an active operation, the internal valve is normally closed.

The sleeve element 33 may be actuated by exciting a single coil 38. The coil is wound around a reel 37. The sleeve element is coaxially positioned inside the reel 37. The coil 38 and the reel 37 are embedded in a shield bush 36. The shield bush 36 surrounds the coil 38 and serves to guide the magnetic field. The shield bush 36 is mounted by a thread to the extension portion 31 of the internal valve. The shield bush 36 is made of a magnetic material to improve magnetic conduction.

A magnetic field may be generated by exciting the coil 38. The magnetic field is represented in Fig. 2a by a line 'B'. The magnetic field B extends from one side till the other side of the coil 38 in a circumferential manner and passes through the shield bush 36 and a cover nut 39 which locks the coil 38 and reel 37 inside the shield bush 36. The magnetic field has a radial course when it passes the cover nut 39. The cover nut 39 is disk shaped and has a central hole which allows the sleeve element 33 to pass. The magnetic field B further extends from the cover nut 39 through the sleeve element, a so called axial course of the magnetic field. The spring is at least partially situated in the axial course of the magnetic field. Preferably, the spring is situated outside the magnetic field. An excitation of the coil causes a magnetic field which extends at least partially in parallel with the closing element 33 and the spring 34. The magnetic field B is kept outside the reel 37, because the reel is made of a non magnetic material.

Herewith, by actuating the coil 38, the magnetic field forces the sleeve element 33 to move in an axial direction against the spring pressure.

The coil 38 has two connector points. A current on the coil can be applied by exciting the connector points. An electrical wire is connectable to a first connector point at one end of the coil, wherein the wire can leave the reel 37 and shield bush 36 via a wire hole 361 to the outside. The wire hole 361 is positioned in a flange at a heading of the reel 37 and the shield bush 36. The electrical wire is subsequently inserted into the hollow space of the piston rod via a wire hole 171 in the extension portion 31. After assembly, these wire holes 361 and 171 are sealed to prevent any leakages. As shown in Fig. 1, the electrical wire to excite the coil can leave the piston rod via the wire hole 53 in the bearing housing 52 of the first connector eye 5.

It is possible to guide two electrical wires from an external control unit to the connector points of the coil, but in a preferred embodiment only one electrical wire is guided through the piston rod and the mentioned wire holes to the coil, wherein the second connector point of the coil is directly grounded to zero potential defined by components of the damper device, like the shield bush 36.

As shown in Fig. 2a, the spring is positioned in between the sleeve element 33 and a base ring 35. The base ring defines a support for the spring. The base ring 35 does support the spring 34 but does also define a stopper ring for the sleeve element 33. The base ring comprises an magnetically isolating material. The base ring is e.g. made from a plastic material or coated with a non conductive coating. The base ring prevents a direct contact between a heading of the sleeve element 33 and an opposite magnetic material of a component, here the shield bush 36, of the internal valve. The stopper ring defines an interruption in a magnetic field in between a heading of the sleeve element and an opposing component of the internal valve which is in Fig. 2a the shield bush 36. The magnetic field B is locally at the heading of the sleeve element bended away. A main portion of the magnetic field leaves the sleeve element at the outer circumferential surface and not at the heading surface.

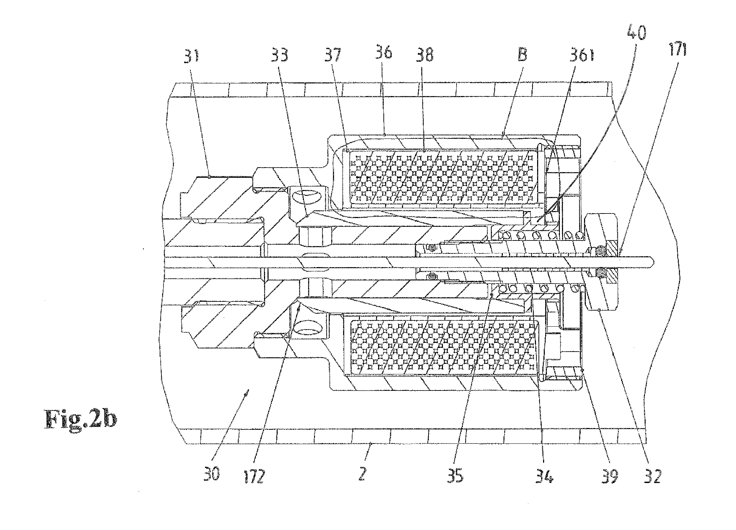

Fig. 2b shows an alternative preferred embodiment of the internal valve. Corresponding reference numbers from Fig. 2a correspond to similar components. The internal valve of Fig. 2a differs in some aspects from the shown internal valve in Fig. 2b. Both internal valves are mounted at the distal end of the piston rod. Both internal valves have a sleeve element as a closing element which is axially movable.

However, in Fig. 2a the spring is mounted at the left side of the closing element and in Fig. 2b the spring is mounted at the right side of the closing element. The opening 172 of the by pass channel are in both configurations provided at the other side of the closing element opposite the spring. The internal valve of Fig. 2b may provide an advantage in that the closing element may automatically compensate for undesired accelerations of the piston rod 3 into the cylinder housing 2. When the piston rod accelerates into the cylinder housing, the closing element will as a result of inertia respond later which result in a closing of the opening of the by pass channel. The closing of the by pass channel will increase the damping characteristic which gives a compensation for the undesired acceleration of the piston rod into the cylinder housing.

The internal valve of Fig. 2b differs in a second aspect in that the spring 34 is partially positioned in a spring container. The spring container has a cylindrical shape. The spring abuts against an inner flange of the spring container. The spring container has an outer flange which abuts against the closing element 33. The spring container is preferably at least partially made of a non magnetic material. The non magnetic spring container may keep the closing element in magnetic isolation from the magnetic body formed by the shield bush 36 and cover nut 39. The spring container may advantageously keep the spring substantially out of the magnetic field. In addition the spring container may further simplify the configuration of the closing element. The closing element 33 may have the simple configuration of a hollow shaft without additional inner or outer recesses for the spring. The closing element may have a hollow shaft shape including over its substantially whole length, in particular over a length within the magnetic field, a substantially constant cross section. In comparison with a locally narrowed cross section, the substantially constant cross section may decrease the magnetic resistance of the closing element which improves the operation of the internal valve. The substantially constant cross section makes the internal valve in particular suitable to operate at low currents. Advantageously, this requires less capacity of a battery system on board of a vehicle.

Fig. 2b further shows an electrode 171 which extends through the piston rod 3. The electrode extends from the main mass to the coil 38. The electrode 171 may be connected to the coil 38 via the wire hole 361. To enhance the mounting of the internal valve, the coil 38 may remain aligned with the cover nut 39 by a notch. The notch (which is shown at the right side of the reel 37 in the lower part) may extend into a recess of the cover nut.

Fig. 3 shows a suspension system comprising a damper device according to the invention. The suspension system is configured as a front fork having a main compression spring in series with the damper device. The front fork has an inner tube 192 and an outer tube 190. The compression spring abuts against a movable cover 23. The movable cover 23 has a disk with a sealing ring around its circumference to seal off a fluid chamber. A spring is provided in between the movable cover and an internal valve 30. The movable cover 23 is supported to the internal valve by the spring.

A piston 12 is arranged at an end of a piston rod 3. The piston rod 3 is elongated by a extension portion 31, wherein the piston 12 is connected to the extension portion. The piston 12 defines two chambers 13,14 inside the cylinder housing 2. In contrast to Fig. 1 wherein the internal valve was arranged in the second chamber, an internal valve is here provided in the first chamber 13.The internal valve 30 has a similar configuration as shown in Fig. 2a. A first opening 16 of a by pass channel 15 is normally closed by a sleeve element of the internal valve. The by pass channel 15 is provided in the extension portion 31. By exciting the internal valve, the sleeve element may be axially moved away from the piston to open the first opening 16 to the by pass channel.

Numerous variants are possible in addition to the embodiment shown.

Several measures are presented which may improve the controllability of a damper device. The combination of measures may provide a good controllable damper device having a technical performance which may comply to nowadays requirements for vehicles. Advantageously, also a presented measure as such may provide a relevant further improvement of the controllability of a damper device.

## Claims

1. Damper device (1) comprising
• a piston rod (3) which extends in an axial direction into a cylinder housing (2), wherein a piston (12) is connected to the piston rod (3), which piston divides the cylinder housing in a first chamber (13) and a second chamber (14); said chambers (13,14) are in fluid communication by passages in said piston (12);
• wherein the piston rod comprises a bypass channel (15) having a first opening (16) in the first chamber (13) and a second opening (172) in the second chamber (14);
• wherein an internal valve (30) is connected to the piston rod (3) inside the cylinder housing for at least partially opening or closing the bypass channel (15), which internal valve comprises:
o a closing element (33) which is coaxially arranged with the piston rod and which is axially movable with respect to the piston rod from a first extreme position to a second extreme position to open or close an opening of the by pass channel;
o a spring (34) which is coaxially connected to the closing element to generate a spring force to force the closing element into the first position; and
o a coil (38) to generate a magnetic field (B) by exciting the coil with a current to actuate the closing element to move against the spring force from the first position to the second position;
o a magnetic body (36,39) to guide a generated magnetic field (B), wherein a clearance (40) is provided in between the magnetic body (36,39) and the closing element (33), wherein
the clearance (40) is oriented in the axial direction, wherein the magnitude of the clearance is variable in the axial direction in dependence of a movement of the closing element (33), **characterised in that** the closing element (33) has a heading surface at the side of the spring which heading surface is in the second position of the closing element magnetically isolated in an axial direction away from the heading surface, such that the axial course of the magnetic field by-passes the heading surface..

2. Damper device according to claim 1, wherein a generated magnetic field has an axial course through the coil (38) and an radial course at both ends of the coil ,wherein the closing element (33) is at least partially situated in the axial course of the magnetic field.

3. Damper device according to claim 1 or 2, wherein the closing element (33) has at least partially a substantially constant outer contour, wherein only the constant outer contour passes the radial course of the magnetic field (B) in a movement of the closing element from the first position to the second position, such that the position of the closing element (33) is continuously controllable in dependence of the amount of current through the coil of the internal valve.

4. Damper device according to one of the preceding claims, wherein the internal valve has only one single coil (38) comprising a first and a second electrical connector (at 361,171) to excite the coil to move the sleeve element away from the first position.

5. Damper device according to claim 4, wherein the first electrical connector of the coil extends outside the cylinder housing (2) and wherein the second electrical connector of the coil is electrically grounded to the damper device inside the cylinder housing (2).

6. Damper device according to any of the preceding claims, wherein the internal valve comprises further a stopper (35) to limit the travel of the closing element in the second position, which stopper at least partially magnetically isolates in axial direction the closing element in the second position.

7. Damper device according to any of the preceding claims, wherein the spring is positioned at least partially in a spring container (35), wherein the spring container abuts against the closing element.

8. Damper device according to any of the preceding claims, wherein the closing element (33) is a sleeve element.

9. Damper device according to any of the preceding claims, wherein the coil (38) is thermo bonded.

10. Damper device according to any of the preceding claims, wherein the internal valve comprises a longitudinal extension piece (31) to assemble the internal valve to an end of a piston rod.

11. Damper device according to any of the preceding claims, wherein the damper device is connectable to a main mass and a spring mass, wherein the closing element is forced by the spring in a direction to the main mass.

12. Internal valve for mounting to a damper device according to any of the preceding claims.

13. Suspension system comprising a damper device according to any of the claims 1-11.

14. Motor vehicle, in particular a motorcycle comprising a damper device according to any of the claims 1-11.

15. Method for controlling a damping characteristic of a damper device according to one of the claims 1-11, wherein the method comprises the following steps:
• Measuring a movement, velocity or acceleration of a piston by a sensor generating a sensor signal;
• Comparing the sensor signal to a control parameter;
• Applying a corresponding current to the internal valve in dependence of the comparison of the control parameter with the sensor signal.
